# EUROPÄISCHE PATENTSCHRIFT

(11) **EP 3 228 908 B1**
(45) Veröffentlichungstag und Bekanntmachung des Hinweises auf die Patenterteilung: **24.06.2020**
(21) Anmeldenummer: 17165153.2
(22) Anmeldetag: 06.04.2017
(51) Int. Cl.: F16K 1/36, F16K 31/06, F16K 31/08, F15B 13/043

(54) **ELEKTROPNEUMATISCHES MAGNETVENTIL, PRALLVENTILGLIED FÜR EIN ELEKTROPNEUMATISCHES MAGNETVENTIL**
ELECTROPNEUMATIC SOLENOID VALVE, IMPACT VALVE BODY FOR AN ELECTROPNEUMATIC SOLENOID VALVE
ÉLECTROVANNE ÉLECTROPNEUMATIQUE, ORGANE DE VALVE À MIROIR POUR UNE ÉLECTROVANNE ÉLECTROPNEUMATIQUE

(30) Priorität: 07.04.2016 DE 102016106410
(43) Veröffentlichungstag der Anmeldung: 11.10.2017
(73) Patentinhaber: Samson Aktiengesellschaft, 60314 Frankfurt am Main (DE)
(72) Erfinder: Kolbenschlag, Stefan, 64291 Darmstadt (DE); Pittelkow, Michael, 63500 Seligenstadt (DE)
(74) Vertreter: Schmid, Nils T.F.

(56) Entgegenhaltungen:
- WO-A1-2005/026598
- DE-A1-102009 038 103
- DE-U1- 9 017 107
- US-A- 5 414 398
- US-A1- 2002 135 451
- US-A1- 2004 261 850
- US-A1- 2005 115 618
- US-B1- 6 415 817

## Beschreibung

Die Erfindung betrifft ein elektropneumatisches Magnetventil für ein pneumatisch betriebenes Feldgerät, insbesondere Stellgerät, wie einen Stellungsregler, einer prozesstechnischen Anlage, wie einer chemischen Anlage, einer petrochemischen Anlage, einer Lebensmittel verarbeitenden Anlage, wie einer Brauerei, einer Kernkraftwerkanlage oder dergleichen.

Das gattungsgemäße, elektropneumatische Magnetventil hat eine Gehäusestruktur, in der üblicherweise ein Luftzuführkanal, zum Anschließen an eine Luftdruckquelle, ein Luftabführkanal und ein Entlüftungskanal gebildet ist. Ein Prallventilglied, wie eine Prallplatte, ist innerhalb einer Luftkammer beweglich gelagert. Eine elektromagnetische Stelleinrichtung verlagert das Prallventilglied insbesondere zwischen zwei Betriebsstellungen, in der jeweils einer der Luftkanäle verschlossen ist. Das Prallventilglied wird üblicherweise in einer axialen Stellrichtung verlagert. Des Weiteren hat das Magnetventil ein Zwangsmittel, wie eine Feder, das das Prallventilglied in axialer Stellrichtung in eine Schließstellung zum Abschließen eines der Luftkanäle zwingt. Das Prallventilglied hat eine magnetische Prallplatte, die außer durch das Zwangsmittel in der Luftkammer führungslos schwimmend gelagert ist.

Ein derartiges elektropneumatisches Magnetventil mit einer Prallplatte als Prallventilglied ist aus DE 196 36 207 C2 bekannt, das sich in der Vergangenheit bewährt hat. Das bekannte Magnetventil bedarf einer präzisen Fabrikation, insbesondere dann, wenn ein präzises Abschließen des jeweiligen Luftkanals bei einem geringen Energiebedarf zu gewährleisten ist. Dabei bewährten sich der einfache technische Aufbau und die präzise Stellung durch die elektropneumatische Stelleinrichtung.

DE 90 17 107 U1 betrifft ein elektromagnetisch betätigbares Ventil.

US 2004/261850 A1 beschreibt ein Membranventil zur Abscheidung von Atomschichten.

US 2005/115618 Albetrifft einen magnetventil-betätigten Proportionalaktor.

US 2002/135451 A1 betrifft Herstellverfahren für Magnetanker.

US 5,414,398 betrifft ein elektromagnetisches Ventil mit einem in einem Spritzgußverfahren hergestellten Ventilschließteil. Aus DE 10 2009 038 103 A1 ist eine Elektromagnetanordnung bekannt. US 6,415,817 B1 betrifft ein Ventil zum dosierten Einleiten von verflüchtigtem Brennstoff.

Es ist Aufgabe der Erfindung, die Nachteile des Standes der Technik zu überwinden, insbesondere ein elektropneumatisches Magnetventil für ein pneumatisch betriebenes Feldgerät insbesondere der gattungsgemäßen Art derart zu verbessern, dass selbst bei unterschiedlichsten Betriebssituationen, eine präzise Funktionsweise des elektropneumatischen Magnetventils einfachen Aufbaus gewährleistet ist.

Diese Aufgabe wird durch die Merkmale von Anspruch 1 gelöst.

Danach ist ein elektropneumatisches Magnetventil für ein pneumatisch betriebenes Feldgerät, insbesondere Stellgerät, einer prozesstechnischen Anlage, wie einer chemischen Anlage, einer petrochemischen Anlage, einer Lebensmittel verarbeitenden Anlage, wie einer Brauerei, einer Kernkraftwerkanlage oder dergleichen, vorgesehen. Das Magnetventil hat einen Luftzuführkanal insbesondere zum Anschließen an einer Luftdruckquelle, beispielsweise von konstant 6 (sechs) bar. An dem Luftzuführkanal kann auch ein geregeltes Luftsignal beispielsweise von einem elektropneumatischen Stellungsregler angeschlossen sein. Des Weiteren hat das Magnetventil einen Luftabführkanal zum Anschluss beispielsweise an einen pneumatischen Stellantrieb, der einfach oder doppeltwirkend sein kann. Insbesondere im Hinblick auf einen Notschließbetrieb kann das Magnetventil zusätzlich einen Entlüftungskanal aufweisen. Das Magnetventil definiert teilweise durch seine Gehäusestruktur eine Luftkammer, in die die Luftkanäle münden. Die Luftkammer ist vorzugsweise außer von der Gehäuseinnenstruktur des Magnetventils auch durch zu magnetisierende Strukturen (deren insbesondere axiale Begrenzungsflächen) begrenzt, welche zum Beispiel der Spulenkern oder der Spulenmantel ist. Vorzugsweise ist in dem Spulenkern einer der Luftkanäle, wie der Entlüftungskanal, ausgebildet. Zum Freigeben und Schließen des jeweiligen Luftkanals hat das elektropneumatische Magnetventil gemäß der Erfindung ein als magnetisierbare Prallplatte ausgeführtes Prallventilglied, die insbesondere zueinander parallele, ebene Plattenseiten definiert, und eine elektromagnetische Stelleinrichtung, die das Prallventilglied zum Be- und/oder Entlüften des Luftabführkanals in einer axialen Stelleinrichtung verlagert. Die elektromagnetische Stelleinrichtung ist vorzugsweise durch eine elektrisch zu versorgende Spule gebildet, die den Spulenkern aus Metall radial umgibt und hat zum Aufbau eines geschlossenen Magnetkreises einen die Spule radial umgebenden Spulenmantel, welche Komponenten beispielsweise näher in den Figuren dargestellt sind. Des Weiteren hat das Magnetventil ein zusätzliches, insbesondere mechanisches, Zwangsmittel, wie eine Druckfeder, oder eine magnetische Zwangsbetätigung, das/die das Prallventilglied in Stellrichtung in eine Schließstellung zum Abschließen eines der Luftkanäle zwingt. Vorzugsweise kann die elektromagnetische Stelleinrichtung das Prallventilglied zwischen zwei Betriebsstellungen, insbesondere Schließstellungen, bewegen, in der einerseits der Luftzuführkanal oder Luftabführkanal und andererseits der Entlüftungskanal durch das Prallventilglied luftdicht verriegelt ist. Erfindungsgemäß hat das Prallventilglied ein insbesondere auf der Stellrichtungsachse liegendes Verschlusselement, das zum Verschließen eines der Luftkanäle mit einem Begrenzungsmündungsrand des Luftkanals derart in Eingriff kommt, dass das Prallventilglied in einem umlaufenden Axialabstand, insbesondere konstant umlaufender Ringabstand, zur axial benachbarten Begrenzungsinnenwand der Luftkammer angeordnet ist und gehalten ist, so dass das Prallventilglied selbst bei Radialstößen in der Verschlussstellung unverrückbar bleibt. Auf diese Weise ist sichergestellt, dass das Prallventilglied in der Verschlussstellung insbesondere ausschließlich mit dem Begrenzungsmündungsrand dichtend in Kontakt steht, um ein sicheres und luftdichtes Abschließen des Luftkanals zu gewährleisten. Ein weiterer Kontakt zu der Begrenzungsinnenwand ist aufgrund des umlaufenden Axialabstands ausgeschlossen.

Es sei klar, dass der umlaufende Axialabstand sich insbesondere dann einstellt, wenn das Prallventilglied in einer insbesondere lotrechten Lage zur Stellrichtungsachse ausgerichtet ist. Dabei ist das Prallventilglied im Hinblick auf den Mündungsrand des zu verschließenden Luftkanals derart dimensioniert, dass ein selbstständiges Ausrichten des Prallventilglieds bei dessen Verlagerung in die Verschlussposition insbesondere unter dem Einfluss der elektromagnetischen Kräfte und/oder des Zwangsmittels veranlasst wird. Vorzugsweise sind der zu verschließende Luftkanal und dessen Mündungsrand in der Luftkammerbegrenzungswand als Ventilsitzbohrung ausgeführt. Das Prallventilglied, die Sitzbohrung, insbesondere sich gegenüberliegende Sitzbohrungen, und ein insbesondere axialer Maximalhub des Prallventilglieds in der Luftkammer sind so dimensioniert/ausgelegt, dass das Prallventilglied, insbesondere im Bereich der Sitzbohrungen, insbesondere durch den Begrenzungsrand der Gehäusestruktur / einer Kernstruktur der elektromagnetischen Stelleinrichtung, gehalten wird und beim Betätigen/Schließen sich insbesondere selbstständig mittig der Sitzbohrung zentriert. In dem insbesondere unbetätigten Betrieb bilden die Bohrungsränder der Sitzbohrung die Haltestruktur, gegen die das Prallventilglied trifft, um in Radialrichtung gehalten zu werden. Beim Betätigen/Schließen des insbesondere kugelförmigen Prallventilglieds tritt die automatische Zentrierung ein.

Bei einer anderen Dimensionierung des Ventilsystems kann es aufgrund der schwimmenden Lagerung des Prallventilglieds durchaus sein, dass das Prallventilglied bei einer Schrägstellung bezüglich der Stellrichtungsachse, die beispielsweise durch eine außergewöhnliche Betriebssituation, wie eine Schlagbelastung auf das Magnetventil, einhergehen kann, in axialen Kontakt mit einer Begrenzungsinnenwand der Luftkammer kommen kann, allerdings nur in einem kleinflächigen Kontaktpunkt, der aber erfindungsgemäß die luftdichte Verschließung des Luftkanals nicht beeinträchtigt.

Die Prallplatte kann derart dimensioniert und strukturiert im Hinblick auf die insbesondere plane Begrenzungsinnenwand der Luftkammer sein, dass sich ein insbesondere konstant umlaufender Axialabstand zur Begrenzungsinnenwand einstellt, insbesondere wenn das plattenförmige Prallventilglied in einer gewünschten lotrechten Lage zur Richtungsachse der elektromagnetischen Stelleinrichtung ausgerichtet ist.

Die Prallplatte ist derart in der Luftkammer anzuordnen, dass eine radiale Berührung der Prallplatte an der Begrenzungswand der Luftkammer ausgeschlossen ist. Ein radialer Kontakt ist vorzugsweise insofern zu vermeiden, als eine erhöhte Reibung, die mit einem Kontakt einhergehen würde, sich negativ hinsichtlich der Funktionsweise auswirken würde. Der radiale Abstand zwischen der Prallplatte und der Begrenzungswand der Luftkammer ist vorzugsweise derart zu wählen, insbesondere zu dimensionieren, dass keine radiale Berührung im Normalbetrieb der Betätigung stattfinden kann. Die magnetische Prallplatte kann im Normalbetrieb derart schwimmend gelagert sein, dass sie in einem Öffnungszustand ausschließlich mit dem Zwangsmittel in einem Berührkontakt steht und dass sie in einem Schließzustand ausschließlich einerseits mit dem Zwangsmittel und andererseits mit einem Ventilsitz oder dergleichen in einem Berührkontakt steht.

Vorzugsweise ist das Prallventilglied, insbesondere die magnetische Prallplatte, ohne jegliche weitere Führungseinrichtung innerhalb der Luftkammer angeordnet, so dass ein Kontakt des Prallventilglieds mit Begrenzungswandabschnitten der Luftkammer nur im Zentrierbereich des Prallventilglieds einhergeht. Weitere Kontakte des Prallventilglieds, insbesondere der Prallplatte, sollen ausgeschlossen sein. Das Weglassen von weiteren Führungseinrichtungen wie Führungsstifte, bedeutet eine deutliche Reduzierung des Montageaufwands, wobei es sich überraschenderweise herausstellte, dass die Funktionsfähigkeit des schwimmend gelagerten Prallventils nicht beeinträchtigt wird.

Bei einer bevorzugten Ausführung der Erfindung ist das Verschlusselement als ein insbesondere beidseitig von dem vorzugsweise planen Prallventilglied vorragenden Vorsprung gebildet, der insbesondere zumindest teilweise kconvexsphärisch geformt ist. Vorzugsweise ist das Verschlusselement in dem axialen Zentrum einer insbesondere kreisförmigen Prallplatte des Prallventilglieds ausgebildet/angeordnet. Vorzugsweise ist das Verschlusselement als separat in der Prallplatte montierte Kugel ausgebildet und/oder aus einem nichtmagnetischen Material, wie Keramik, gebildet. Vorzugsweise besteht die separat montierte Kugel ausschließlich aus dem nicht magnetischen Material. Auf diese Weise wird der Magnetfluss nicht in Richtung des Verschlusselements gelenkt, sondern davon abgelenkt, so dass der Magnetfluss wegen des nichtmagnetischen Verschlusselementmaterials umgeleitet wird. Ein magnetisches Kleben der Kugel wegen des Restmagnetismus zwischen Kugel und Sitz ist daher verhindert.

Bei einer bevorzugten Ausführung der Erfindung hat das Prallventilglied einen radial innenliegenden Innenanschlagsbereich, der dem Spulenkern der elektromagnetischen Stelleinrichtung diametral axial gegenüberliegt, und einen den Innenanschlagsbereich radial außen umgebenden Außenanschlagsbereich, der einen die Spule der elektromagnetischen Stelleinrichtung radial außen umgebenden Spulenmantel der elektromagnetischen Stelleinrichtung oder einem Gehäuseabschnitt des Magnetventils diametral gegenüberliegt. Es sei klar, dass der Außenanschlagsbereich nicht notwendigerweise zur Funktion des Anschlagens dienen muss, allerdings, sollte die schwimmende Lagerung der Prallplatte beispielsweise durch eine vorübergehende Schrägstellung im Montagefall oder bei Schlagbelastung aus der üblichen Verlagerungsstellung und -richtung gelangen, so werden ein außergewöhnlicher Außenanschlag oder Innenschlag ermöglicht, um ein kurzfristiges Verkippen mit begrenzter Kippamplitude zu gewährleisten. Es ist das Zusammenspiel der elektromagnetischen Kraft der elektromagnetischen Stelleinrichtung und/oder des Zwangsmittels im Hinblick auf die Ausführung des Verschlusselements des Prallventilglieds im Zusammenspiel mit dem Mündungsrand des zu verschließenden Verschlusskanals, der das Ausrichten/Halten der Prallplatte zum Ausbilden des kontaktlosen Axialabstands zur Begrenzungswand gewährleistet.

Vorzugsweise ist einer der Luftkanäle, wie der Entlüftungskanal, in dem Spulenkern ausgebildet. Insbesondere bei dieser Ausführung des Luftkanals in dem Spulenkern, mit dem der Verschlussbereich dicht verschließend zusammenwirken soll, ist es von Vorteil, das nichtmagnetische Material für das Verschlusselement vorzusehen.

Bei einer Weiterbildung der Erfindung sind die Prallplatte und die zugeordneten Anschlagsbereiche derart ausgelegt, strukturiert und/oder dimensioniert, dass bei insbesondere dichtender Belegung des Luftkanals in dem Spulenkern durch das Verschlusselement des Prallventilglieds der radial äußere Axialabstand des Prallventilglieds zum Außenanschlagsbereich kleiner als der innere Axialabstand des Prallventilglieds zum Innenanschlagsbereich ist. Vorzugsweise ist der radial innere Axialabstand bei Belegung des Luftkanals in dem Spulenkern durch das Verschlusselement kleiner als 0,5 mm, 0,3 mm oder 0,1 mm. Vorzugsweise oder alternativ dazu ist der radial äußere Axialabstand um wenigstens ein Drittel, vorzugsweise um etwa die Hälfte, kleiner als der radial innere Axialabstand dimensioniert. Auf diese Weise wird sichergestellt, dass die Kippamplitude des schwimmend gelagerten Prallventilglieds begrenzt ist, insbesondere durch den außenliegenden Anschlag.

Bei einer bevorzugten Ausführung der Erfindung ist koaxial dem Luftkanal, insbesondere dem Entlüftungskanal, in dem Spulenkern ein weiterer Luftkanal, wie der Luftzuführkanal oder der Luftabführkanal, in einer Gehäusewand des Magnetventils derart eingebracht, dass eine Rückseite des Verschlusselements, dessen Vorderseite den Luftkanal in dem Spulenkern verschließt, bei entsprechender axialer Verlagerung des Prallventilglieds unter dem Einfluss des Zwangsmittels den Luftkanal in der Magnetventilgehäusewand verschließt, wobei insbesondere radial versetzt zu dem Luftkanal in der Magnetventilgehäusewand ein weiterer Luftkanal, wie der Luftabführkanal oder Luftzuführkanal, ausgebildet ist, der insbesondere von dem Prallventilglied an keiner axialen Stellposition verschließbar ist. Der radial versetzte Luftkanal ist an keiner axialen Stellposition des Prallventilglieds von dem Prallventilglied verschließbar.

Vorzugsweise ist die Luftkammer radial durch eine im Wesentlichen zylindrische Kammerinnenwand begrenzt, die zumindest teilweise durch das Magnetventilgehäuse gebildet ist. Die Luftkammer kann axial durch eine seitliche Gehäusewand begrenzt sein, in der wenigstens zwei Luftkanäle eingebracht sind, und die der magnetisierbaren Komponente der elektromagnetischen Stelleinrichtung gegenüberliegt. Es ist diese magnetische Struktur der elektromagnetischen Stelleinrichtung, welche die Luftkammer an der gegenüberliegenden Axialseite begrenzt. In der zylindrischen Luftkammer kann die kreisförmige Prallplatte des Prallventilglieds insbesondere konstanter Prallplattenstärke axial beweglich und insbesondere wie ein Kolben schwimmend gelagert sein. Insbesondere ausschließlich durch das Zwangsmittel ist das Prallventilglied mechanisch geführt. Erfindungsgemäß ist die axiale maximale Bewegungsamplitude des Prallventilglieds in axialer Stellrichtung höchstens ein Zehntel (die Dicke der Prallplatte liegt zwischen 0,6 mm und 1mm und der Hub zwischen 0,1 mm und 0,3: mm) der insbesondere konstanten axialen Stärke der Prallplatte.

Auf diese Weise ist ein guter Luftaustausch zwischen den beiden von der Prallplatte getrennten Luftkammerabteilen gewährleistet. Die Prallplatte dient dem individuellen Luftkanalverschluss und bewegt sich axial zwischen den sich gegenüberliegenden axialen Begrenzungswänden der Luftkammer, in dem die insbesondere sich axial gegenüberliegenden Luftkanäle angeordnet sind.

Vorzugsweise ist die axiale insbesondere maximale Bewegungsamplitude des Prallventilglieds in axialer Stellrichtung mindestens 1/10, mindestens 1/8 oder mindestens ¼ des Düsendurchmessers und/oder höchstens 9/10, höchstens 2/3, höchstens ½ des Düsendurchmessers. Insbesondere beträgt der Hub bzw. die Bewegungsamplitude zwischen 0,1 mm und 1,5 mm, vorzugsweise zwischen 0,2 mm und 0,6 mm, besonders bevorzugt 0,4 mm. Die Prallplattendicke (Querschnitt) ist vorzugsweise wenigstens so dick, dass Sie bei maximaler Bestromung der Magnetspule noch nicht in die magnetische Sättigung kommt. Insbesondere hat die Prallplatte eine geringe Dicke von weniger als 2 mm, vorzugsweise weniger als 1 mm, besonders bevorzugt weniger als 0,5 mm, um die Masse der Prallplatte klein zu halten.

Des Weiteren betrifft die Erfindung ein Prallventilglied zum Anordnen in einer Luftkammer eines insbesondere erfindungsgemäßen elektropneumatischen Magnetventils. Das Prallventilglied hat eine Prallplatte und gegebenenfalls das oben genannte Verschlusselement. Die Prallplatte hat eine axiale Verschlussseite, vorzugsweise zwei sich diametral gegenüberliegende axiale Verschlus s seiten, die wenigstens einem zu schließenden oder freizugebenden Luftkanal zuzuwenden ist und zumindest flächenabschnittsweise in Kontakt mit einer von einer elektromagnetischen Stelleinrichtung des Magnetventils zu magnetisierenden, axialen Anlagewand der Luftkammer kommen kann.

In der Anlagewand ist der wenigstens eine Luftkanal ausgebildet. Erfindungsgemäß ist die wenigstens eine Verschlussaußenseite, vorzugsweise beide sich axial diametral gegenüberliegenden Verschlussaußenseiten, zumindest flächenabschnittsweise, mit einem nicht magnetisierbaren Material, wie Teflon, ausgebildet, insbesondere mit einer nicht magnetisierbaren Deckschicht, wie einer Teflonschicht, versehen. Erfindungsgemäß wird erreicht, dass ein magnetisches Ankleben auch nach der Deaktivierung der elektromagnetischen Stelleinrichtung insbesondere an dem magnetisierten Bestandteil der elektromagnetischen Stelleinrichtung, wie dem Spulenkern und/oder dem Spulenmantel, verhindert ist. Der Klebevermeidungseffekt wird also mittels eines Materials erreicht, das nicht magnetisierbar ist und an der Außenkontaktseite der Prallplatte vorgesehen ist. Dabei ist allerdings zu gewährleisten, dass die Prallplatte per se magnetisierbar bleibt. Insofern kann ein nicht magnetisierbares Material die Außenseite der Prallplatte bilden, wobei beispielsweise zumindest ein Kernbereich magnetisierbar ist oder magnetisierbare Teilchen innerhalb eines nicht magnetisierbaren Materials enthalten sind.

Weitere Aspekte der Erfindung sind in den Unteransprüchen angegeben.

Weitere Vorteile, Merkmale und Aspekte der Erfindung sind durch die folgende Beschreibung bevorzugter Ausführungen der Erfindung anhand der beiliegenden Zeichnungen erläutert, in den zeigen:
- Fig. 1: eine Querschnittsansicht eines erfindungsgemäßen elektropneumatischen Magnetventils, bei dem die elektromagnetische Stelleinrichtung aktiviert ist, um das Prallventilglied anzuziehen und einen stelleinrichtungsseitigen Luftkanal zu verschließen;
- Fig. 2: eine Querschnittsansicht des elektropneumatischen Magnetventils nach Fig. 1, in dem die elektromagnetische Stelleinrichtung deaktiviert wird und das als Feder ausgebildete Zwangsmittel das Prallventilglied an die gegenüberliegende Seitenwand mit zwei Luftkanälen drückt;
- Fig. 3: eine Detailquerschnittsansicht einer weiteren Ausführung eines nicht erfindungsgemäßen Magnetventils mit aktivierter elektromagnetischer Stelleinrichtung;
- Fig. 4: die Querschnittsdetailansicht gemäß Fig. 3, wobei die elektromagnetische Stelleinrichtung deaktiviert ist;
- Fig. 5: eine Querschnittsdetailansicht der Ausführung des erfindungsgemäßen Magnetventils nach Fig. 1, 2 mit der aktivierten elektromagnetischen Stelleinrichtung;
- Fig. 6: die Querschnittsansicht nach Fig. 5, wobei die elektromagnetische Stelleinrichtung deaktiviert ist.

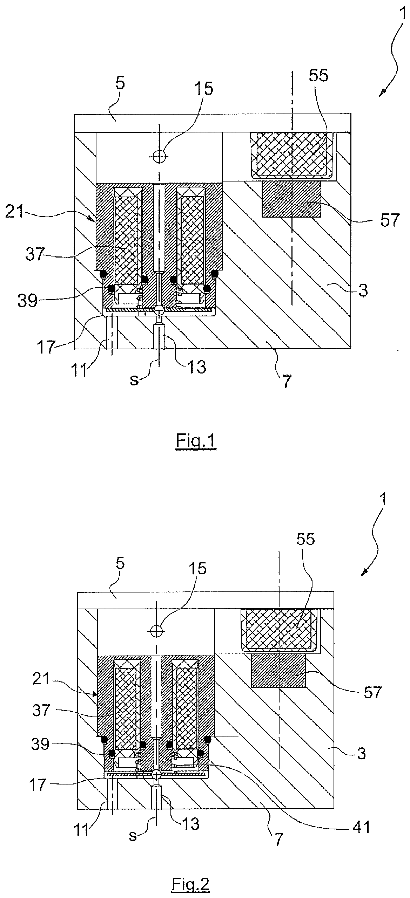

In Fig. 1, 2, 5 und 6 ist eine erste Ausführung eines erfindungsgemäßen elektropneumatischen Magnetventils dargestellt, das im Allgemeinen mit der Bezugsziffer 1 versehen ist.

Das elektropneumatische Magnetventil 1 umfasst ein Gehäuse 3 mit einem Deckel 5, der an dem Gehäuse 3 befestigt ist. An einem dem Deckel 5 gegenüberliegenden Anschlusswandabschnitt 7 des Gehäuses 3 sind zwei Luftkanäle in die Gehäusestruktur eingebracht, nämlich ein Luftabführkanal 11 und ein Luftzuführkanal 13. Benachbart dem Deckel 5 ist ein weiterer Luftkanal in der Gehäusestruktur 3 eingearbeitet und mit der Bezugsziffer 15 angedeutet. Dieser Luftkanal ist der Entlüftungskanal 15, der ungehindert an die Außenseite des Gehäuses 3 mündet.

Die drei Luftkanäle 11, 13, 15 sind pneumatisch mit einer Luftkammer 17 verbunden, welche zum Teil von einer Innenwandfläche des Gehäuses 3 begrenzt ist.

Der Luftraum 17 ist zylindrisch und zusätzlich von einer magnetischen Einfassstruktur einer später noch erläuterten elektromagnetischen Stelleinrichtung 21 begrenzt. In dem zylindrischen Luftraum 17 ist kolbengemäß ein plattenförmiges Prallventilglied 23 beweglich schwimmend gelagert angeordnet. Das Prallventilglied 23 umfasst eine ebene Prallplatte 25 aus magnetischen, insbesondere weichmagnetischem, Material, wobei die Prallplatte 25 zwei ebene Plattenflächen 27, 29 umfasst, zu der lotrecht die axiale Stellrichtung S angeordnet ist, längs der die elektromagnetische Stelleinrichtung 21 das Prallventilglied 23 stellt.

Der Luftzuführkanal 13 verläuft koaxial zur axialen Stellrichtung S, wobei der Verlauf des Abführkanals 11 im Anschlussabschnitt 7 des Gehäuses 3 sich auch in axialer Stellrichtung S erstreckt aber zum Luftzuführkanal 13 radial versetzt angeordnet ist. Wie bereits oben angedeutet ist, münden beide Luftkanäle 11, 13 in die Luftkammer 17.

In der zentralen Mitte der insbesondere kreisförmigen Prallplatte 25 ist eine Aussparung vorgesehen, in die ein kugelförmiges Verschlusselement 31 aus einem nichtmagnetischen Material, wie Keramik, eingesetzt und befestigt, insbesondere eingepresst, ist.

Das kugelförmige Verschlusselement 31 steht an beiden Plattenflächen 27, 29 in Axialrichtung vor, auf einer Seite 27 auf radialer Höhe des Zuführkanals 13, diesem zugewandt, auf der anderen Seite 29 auf radialer Höhe des Mündungsbereichs des Entlüftungskanals 15, der in einem Spulenkern 33 der elektromagnetischen Stelleinrichtung 21 eingebracht ist. Die halb- oder teilsphärischen, vorragenden Verschlusselemente, die von der ebenen Prallplatte 25 vorstehen, sind derart dimensioniert, dass sie im Wesentlichen luftdicht bei der entsprechenden Anschlagsposition in den Mündungsbereich des jeweiligen Luftkanals 13, 15 eingreifen können, um einerseits die Entlüftung des elektropneumatischen Magnetventils 1 (geschlossener Entlüftungskanal 15) zu vermeiden, andererseits die weitere Zufuhr von Druckluft einer nicht dargestellten Druckluftquelle über die Zuführleitung 13 zu vermeiden. Dabei ist der axiale Maximalhub H des Prallventilglieds 23 derart durch die axialen Begrenzungswände begrenzt, dass die beidseitig vorstehenden Verschlusselemente einen Kontakt der Prallplatte 25 mit dem Gehäuse vermeiden, da das jeweilige Verschlusselement erst in Eingriffkontakt mit dem Mündungsrand des jeweiligen Luftkanals 13 oder 15 kommt. Ein axiales Austreten aus der Eingriffssphäre des Mündungsrands wird in allen axialen Positionen des Verschlusselements ausgeschlossen, was insbesondere durch die teilsphärische Form des Verschlusselements realisiert ist.

Die elektromagnetische Stelleinrichtung 21 umfasst eine Spule 37, welche den Spulenkern 33 in Umfangsrichtung umgibt. Die Spule 37 ist an eine elektrische Betätigungsquelle insbesondere über eine Stellungs- oder Regelungseinrichtung angeschlossen und empfängt elektrische Stellsignale, um die magnetisierbare Prallplatte 25 des Prallventilglieds 23 magnetisch zu betätigen. In Fig. 1 ist der Anziehungszustand gezeigt, in dem die Spule 37 aktiviert ist und über den magnetischen Schluss an dem prallventilgliedseitigen Abschnitt des magnetisierten Spulenkerns 33 und des die Spule 37 außen umgebenden Spulenmantels 39 zu erreichen ist. In Fig. 2 ist die inaktive Spule 37 dargestellt und das Prallventilglied 23 ist aufgrund der als Zwangsmittel ausgebildeten Feder 41 gegen den Mündungsrand des Zuführkanals 13 gedrückt, um diesen luftdicht zu verschließen (Fig. 2).

Das Prallventilglied 23 ist innerhalb der Luftkammer 17 schwimmend gelagert, d.h. die einzigen Kräfte, die auf das Prallventilglied 23 wirken, sind gegebenenfalls die elektromagnetischen Kräfte der Stelleinrichtung, falls diese aktiviert sind, und die ständige Druckfederkraft der Feder 41 und die Gewichtskraft des Prallventilglieds selbst (je nach Ausrichtung des Magnetventils bezüglich der Gravitationsrichtung). Eine zusätzliche Führung zum axialen Verlagern des Prallventilglieds 23 in axialer Stellrichtung S ist nicht notwendig. Überraschenderweise zeigte es sich, dass nicht einmal eine Befestigung der an der Prallplatte 25 anliegenden Federwindung an der Prallplatte 25 befestigt sein muss, sondern lediglich die Druckkräfte im Zusammenspiel mit den elektropneumatischen Kräften der Stelleinrichtung reichen dazu aus, die Positionierung des Prallventilglieds sicherzustellen. Selbstverständlich ist das Prallventilglied, wenn es in der jeweiligen Endposition (Verschluss der Zuführleitung des Zuführkanals 13 / Verschluss des Entlüftungskanals 15) ortsfest angeordnet ist, weil das sphärische Verschlusselement 33 sich in den Mündungskanal des jeweiligen Luftkanals selbstzentrierend einpasst. Allerdings ist auf dem Weg von der einen Endposition zur anderen Luftkanalverschlussposition keine weitere Führung vorgesehen, um das Prallventilglied 23 innerhalb der Luftkammer axial zu stellen.

Zur Betätigung des Prallventilglieds 23 wird ein Magnetfeld elektromagnetisch aufgebaut, das das Prallventilglied 23 abhängig von der Bestimmung der elektromagnetischen Stelleinrichtung betätigen soll. Unabhängig von der elektromagnetischen Stelleinrichtung kann das Magnetventil, insbesondere die axiale Verlagerbarkeit des Prallventilglieds, einfach anhand eines Funktionsüberprüfungsmechanismus überprüft werden, der insbesondere durch einen zusätzlichen Dauermagnet 55 gebildet ist, der von einer Verstauungsposition in eine Prüfposition verbringbar, insbesondere verschwenkbar ist. Der Dauermagnet 55 dient dazu, die magnetisierbaren Komponenten der elektromagnetischen Einrichtung in ein Magnetfeld zu setzen und zu überprüfen, ob daraufhin das Prallventilglied 23 axial gestellt wird. Eine Bestromung der elektromagnetischen Stelleinrichtung 21 ist bei der Funktionsüberprüfung aufgrund des zusätzlichen Einsatzes des Dauermagneten 55 nicht notwendig. Der Verstauungszustand des Dauermagneten 55 ist in Fig. 1 dargestellt. Der aktive Prüfzustand ist in den Figuren nicht näher dargestellt. Der Dauermagnet 55 befindet sich in Axialrichtung neben (oberhalb) der elektromagnetischen Stelleinrichtung 21.

Um den Dauermagneten 55 in der Passivposition (Fig. 1) festzulegen, liegt dieser einem weichmagnetischen Fixierelement 57 gegenüber, wodurch der Dauermagnet 55 unter Einfluss seiner magnetischen Kraft in der Position gehalten wird. Um den Dauermagneten 55 in die Aktivposition, die nicht näher dargestellt ist, zu verschwenken, müssen die Haltekräfte überwunden werden. In der Prüfposition, in der der Dauermagnet 55 "aktiviert oder aktiv geschaltet ist", liegt der Dauermagnet 55 diametral auf der gegenüberliegenden Seite der Prallplatte 25 und betätigt diese magnetisch berührungslos. Auf diese Weise kann visuell geprüft werden, ob die Prallplatte 25 je nach Position des Dauermagneten 55 den jeweiligen Luftkanal 13, 15 verschließt.

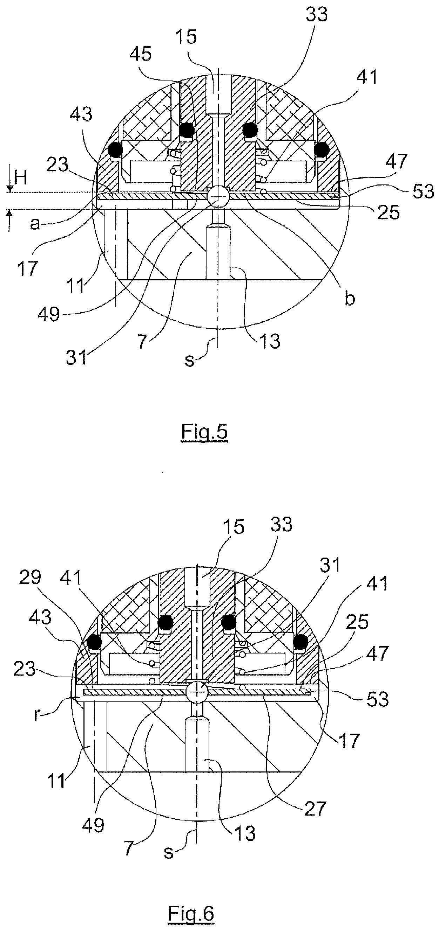

Wie in Fig. 5 und 6 ersichtlich ist, besteht bei jeder Position des Prallventilglieds 23 ein Axialspalt a und b gegenüber der radialen Stirnfläche 45 des Spulenkerns 33 bzw. der radialen Stirnfläche 47 des Spulenmantels 43. Selbst in der nächsten Position des Prallventilglieds 23 zur elektromagnetischen Stelleinrichtung 21 besteht ein umlaufender Axialspalt a, b zwischen der Stirnseite 45, 47 des Spulenkerns 23 bzw. des Spulenmantels 43 und einem Innenanschlagsplattenabschnitt 49 bzw. einen Außenanschlagsplattenabschnitt 53. Die Anschlagsplattenabschnitte 49, 53 sind nicht notwendigerweise im normalen Betrieb auftretende Anschläge, da die schwimmende Lagerung aufgrund der herrschenden Kräfte wohl ausgewogen ist, so dass ein Anschlag auch im Hinblick auf die Gestaltung des Schlusselements 31 und der jeweiligen Mündungsbereiche der Luftkanäle 13, 15 angepasst ist, so dass ein Anschlag nicht in Betracht kommt. Lediglich bei außergewöhnlicher Belastung, wie Schlagbelastung, kann ein Anschlag im Hinblick auf die genannten Plattenabschnitte kommen. Dieser umlaufende Spalt besteht dann, wenn die Platte 25 des Prallventilglieds 23 lotrecht zur Stellrichtungsachse S ausgerichtet ist.

Wie ebenfalls in Fig. 5 ersichtlich ist, die den Zustand des luftdichten Verschlusses des Entlüftungskanals 15 darstellt, ist der umlaufende Axialabstand a, der insbesondere in der gesamten Umlaufrichtung konstant ist, geringfügig kleiner als der Axialabstand b der Prallplatte 25 bezüglich der Stirnfläche 45 der Spule 33. Auf diese Weise ist eine Kippamplitude bis zu einem Anschlag der Prallplatte an die Stirnfläche des Spulenmantels relativ klein gehalten, so dass eine stabile Endlage gemäß Fig. 5 erreicht ist. Vorzugsweise ist der Axialspalt a ≤ (kleiner gleich) der Hälfte des Axialabstands b. Der Axialabstand a soll nicht größer als 0,1 mm, 0,2 mm, 0,3 mm oder 1 mm ausgebildet sein.

In der in Fig. 5 dargestellten Betriebsposition ist der Luftzuführkanal 13 offen, so dass der Abführkanal 11 mit dem Druck beaufschlagt wird, der an dem Zuführkanal 13 anliegt. In diesem Zustand ist die elektromagnetische Stelleinrichtung 21 aktiviert, so dass die elektromagnetischen Anziehungskräfte durch den Spulenkern 33, die Spule 37 und den Spulenmantel 43 größer sind als die Druckkräfte der Zwangsfedern 41.

Bei allmählicher Abnahme der elektromagnetischen Kraft oder vollständigen Abschaltens der elektromagnetischen Einrichtung 21 übernimmt die Zwangsfeder 41 die Betätigung des Prallventilglieds 23 und drückt letzteres gegen die Innenseite des Anschlusswandabschnitts 7 des Gehäuses 3, wodurch das zugewandte sphärische Verschlusselement 31 luftdicht gegen die Mündung des Zuführkanals 13 eingreift. Auf diese Weise ist die Luftzufuhr über den Luftkanal 13 verhindert, und der Abführkanal 11 ist mit dem Entlüftungskanal 15 pneumatisch verbunden, wodurch das elektropneumatische Magnetventil 1 entlüftet ist. Es zeigt sich, dass die Position der Prallplatte 25 des Prallventilglieds 23 aufgrund des Eingriffs des sphärischen Verschlusselements 31 in die Mündung des Luftzuführkanals 13 in Kombination mit den Druckkräften der Zwangsfeder 41 eine stabile luftdichte Endposition der Prallventilplatte gewährleistet.

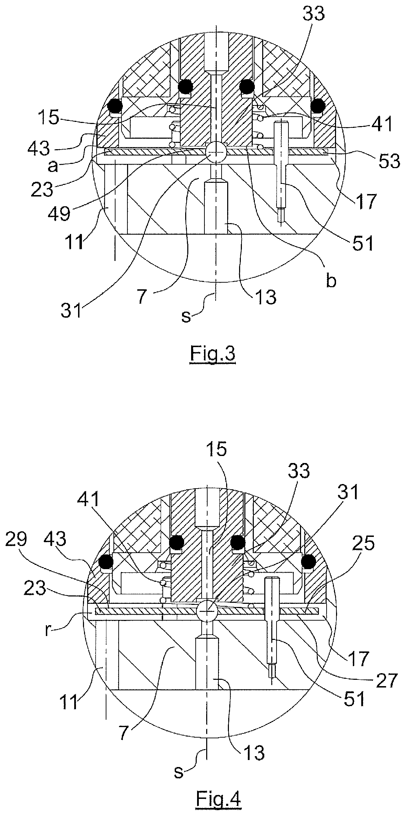

In Fig. 3 und 4 ist eine alternative Ausführung vorgesehen, die nicht Teil der Erfindung ist, in der zusätzlich ein Führungsstift 51 an dem Anschlussabschnitt 7 befestigt ist und in die Luftkammer 17 ragt. Dieser Führungsstift 51 dient in erster Linie nicht zur Führung des Prallventilglieds 23 bei normalem Betrieb des Hin- und Herbewegens des Prallventilglieds 23 in axialer Stellrichtung S. Vielmehr soll mit dem Einsetzen des Stifts eine axiale Führung 51 dahingehend vorgesehen sein, dass die radiale Position des Prallventilglieds bei stoßartigen Überlastbewegungen auf das Magnetventil beispielsweise bei Transport oder Montage gesichert ist, um eine Fehlausrichtung des Prallventilglieds 23 zu vermeiden. Selbstverständlich können diese Führungsstifte 51 weggelassen werden, auch dann, wenn der Radialabstand r zwischen dem kreisringförmigen Außenrand der Platte 25 des Prallventilglieds 23 und der gegenüberliegenden zylindrischen Innenwandseite des Gehäuses 3 der Luftkammer 17 nur eine geringfügige radiale Bewegung zulässt.

Es sei klar, dass neben dem einzelnen in Fig. 3 und 4 dargestellten Stift auch mehrere Stifte vorgesehen sein können, ohne dass sie eine Führungsfunktion ausführen. Durch die Kontaktlosigkeit der Führungsstifte in den Durchgängen innerhalb der Platte 25 des Prallventilglieds 23 ist ein Reibungseffekt und damit Reibungsverluste zwischen dem Prallventilglied und den Führungsstiften ausgeschlossen. Auf die Stifte kann vorzugsweise verzichtet werden.

Erfindungsgemäß ist der Radialabstand oder -spalt r kleiner als 2 mm, vorzugsweise kleiner als 1 mm, 0,5 mm oder 0,2 mm.

Das in den Figuren dargestellte Prallventilglied 23 ist vorzugsweise aus einem weichmagnetischen Material, wie Metall, vorzugsweise Ferrit, um Anziehungskräfte durch die elektromagnetische Stelleinrichtung aufzunehmen. Es zeigte sich allerdings bei metallischen Prallventilgliedern, insbesondere Prallplatten 25, dass selbst bei Entstromung der Spule 37 der elektromagnetischen Stelleinrichtung 21 Restmagnetkräfte wirken, welche ein Anhaften des Prallventilglieds 25 an den Metallelementen der unbestromten Stelleinrichtung bewirken. Erfindungsgemäß kann das magnetische Prallventilglied mit einer Beschichtung aus nichtmagnetischem Material, wie Teflon, versehen sein, welches das Anhaften vermeidet. In Kombination mit den Axialspalten oder Axialabständen a, b ist in Kombination mit der nichtmagnetischen Beschichtung (insbesondere der Teflonschicht) erreicht, dass ein magnetisches Anhaften an dem Spulenkern 33 oder dem Spulenmantel 43 ausgeschlossen werden kann. Es sei klar, dass die Prallplatte 25 auch durch einen nichtmetallischen Werkstoff, wie Kunststoff, realisiert sein kann, welche zur Aufnahme von Anziehungskräften mit metallischen Partikeln versehen ist. Bei einer solchen Kunststoff-Prallventilgliedausführung kann von einer nichtmagnetischen Beschichtung abgesehen werden.

Wie in Fig. 3 bis 6 ersichtlich ist, ist die Luftkammer mehr oder weniger als zylindrischer Spalt mit einer axialen Tiefe von etwas größer, vorzugsweise das Dreifache oder Vierfache, kleiner als das Fünffache der axialen Stärke der Platte 25 des Prallventilglieds 23 ausgeführt. Auf diese Weise ist auch ein Verkanten des schwimmend gelagerten Prallventilglieds 23 insbesondere bei Montage und Transport behindert.

Die radialen Anschläge, wie die Innenseite des Gehäuses 3, und die axialen Anschläge, wie bei dem Spulenmantel 43 und dem Spulenkern 33, insbesondere deren Stirnseiten sowie die gegenüberliegenden radial verlaufenden Innenwandflächen, dienen nicht zur Führung des Prallventilglieds.

Es sei klar, dass das erfindungsgemäße Magnetventil 1 insbesondere zum Einsatz in Stellungsreglern und in Kombination mit pneumatischen Antrieben, die einfach und doppeltwirkend sind, eingesetzt werden können.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: elektropneumatisches Magnetventil
- 3: Gehäuse
- 5: Deckel
- 7: Anschlusswandabschnitt
- 11: Luftabführkanal
- 13: Luftzuführkanal
- 15: Entlüftungskanal
- 17: Luftkammer
- 21: elektromagnetische Stelleinrichtung
- 23: Prallventilglied
- 25: Prallplatte
- 27, 29: Plattenflächen
- 31: Verschlusselement
- 33: Spulenkern
- 37: Spule
- 41: Feder
- 43: Spulenmantel
- 45, 47: radiale Stirnfläche
- 49: Innenanschlagsplattenabschnitt
- 51: Führungsstift
- 53: Außenanschlagsplattenabschnitt
- 55: Dauermagnet
- 57: Fixierelement

- S: Stelleinrichtung/Stellrichtungsachse
- a: Axialspalt
- b: Axialabstand
- H: Bewegungsamplitude/Maximalhub

## Patentansprüche

1. Elektropneumatisches Magnetventil (1) für ein pneumatisch betriebenes Feldgerät einer prozesstechnischen Anlage, wie einer chemischen Anlage, einer petrochemischen Anlage, einer Lebensmittel verarbeitenden Anlage, wie einer Brauerei, einer Kernkraftwerkanlage oder dergleichen, umfassend:
- einen Luftzuführkanal (13), einen Luftabführkanal (11) und einen Entlüftungskanal (15), wobei die Luftkanäle (11, 13, 15) in eine Luftkammer (17) münden;
- ein Prallventilglied (23), das als eine magnetisierbare Prallplatte (25) mit wenigstens einer Verschlussseite, die wenigstens einem zu schließenden oder freizugebenden Luftkanal (13, 15) zuzuwenden ist, ausgeführt ist; und
- eine elektromagnetische Stelleinrichtung (21), die die Prallplatte (25) zum Be- und/oder Entlüften des Luftabführkanals (11) in einer axialen Stellrichtung (S) verlagert, wobei die Prallplatte (25) in Kontakt mit einer von einer elektromagnetischen Stelleinrichtung (21) des Magnetventils (1) zu magnetisierenden, axialen Anlagewand der Luftkammer (17) kommen kann;
- ein Zwangsmittel, wie eine Feder, das die Prallplatte (25) in der axialen Stellrichtung (S) in eine Schließstellung zum Abschließen eines der Luftkanäle (13, 15), wie des Zuführkanals (13), zwingt, wobei die Prallplatte (25) ein Verschlusselement (31) umfasst, das zum Verschließen des Luftkanals (13, 15) mit einer Begrenzungsinnenwandmündung einer Begrenzungsinnenwand des Luftkanals derart in Eingriff kommt, dass die Prallplatte (25) in einem umlaufenden Axialabstand zur Begrenzungsinnenwand angeordnet ist, wobei die Prallplatte (25) außer durch das Zwangsmittel in der Luftkammer führungslos schwimmend gelagert ist, **dadurch gekennzeichnet, dass** die wenigstens eine Verschlussseite zumindest flächenabschnittsweise mit aus einem nicht magnetisierbaren Deckmaterial, wie einer Deckschicht, vorzugsweise Teflonschicht, ausgebildet ist oder dass die Prallplatte (25) durch einen nichtmetallischen Werkstoff, wie Kunststoff, realisiert ist, welcher zur Aufnahme von Anziehungskräften mit metallischen Partikeln versehen ist, und dass die Luftkammer (17) radial durch eine Kammerinnenwandung begrenzt ist, wobei in der Luftkammer (17) die kreisförmige Prallplatte (25) axial beweglich schwimmend gelagert ist, wobei eine axiale maximale Bewegungsamplitude (H) der Prallplatte (25) in axialer Stellrichtung (S) höchstens das ein Zehntel der axialen Stärke der Prallplatte (25) ist, wobei die Dicke der Prallplatte (25) zwischen 0,6 mm und 1 mm liegt und/oder ein Maximalhub 0,1 mm bis 0,3 mm beträgt.

2. Elektropneumatisches Magnetventil (1) für ein pneumatisch betriebenes Feldgerät einer prozesstechnischen Anlage, wie einer chemischen Anlage, einer petrochemischen Anlage, einer Lebensmittel verarbeitenden Anlage, wie einer Brauerei, einer Kernkraftwerkanlage oder dergleichen, umfassend:
- einen Luftzuführkanal (13), einen Luftabführkanal (11) und einen Entlüftungskanal (15), wobei die Luftkanäle (11, 13, 15) in eine Luftkammer (17) münden;
- ein Prallventilglied (23), das als eine magnetisierbare Prallplatte (25) mit wenigstens einer Verschlussseite, die wenigstens einem zu schließenden oder freizugebenden Luftkanal (13, 15) zuzuwenden ist, ausgeführt ist; und
- eine elektromagnetische Stelleinrichtung (21), die die Prallplatte (25) zum Be- und/oder Entlüften des Luftabführkanals (11) in einer axialen Stellrichtung (S) verlagert, wobei die Prallplatte (25) in Kontakt mit einer von einer elektromagnetischen Stelleinrichtung (21) des Magnetventils (1) zu magnetisierenden, axialen Anlagewand der Luftkammer (17) kommen kann;
- ein Zwangsmittel, wie eine Feder, das die Prallplatte (25) in der axialen Stellrichtung (S) in eine Schließstellung zum Abschließen eines der Luftkanäle (13, 15), wie des Zuführkanals (13), zwingt, wobei die Prallplatte (25) ein Verschlusselement (31) umfasst, das zum Verschließen des Luftkanals (13, 15) mit einer Begrenzungsinnenwandmündung einer Begrenzungsinnenwand des Luftkanals derart in Eingriff kommt, dass die Prallplatte (25) in einem umlaufenden Axialabstand zur Begrenzungsinnenwand angeordnet ist, wobei die Prallplatte (25) außer durch das Zwangsmittel in der Luftkammer führungslos schwimmend gelagert ist, **dadurch gekennzeichnet, dass** die wenigstens eine Verschlussseite zumindest flächenabschnittsweise mit aus einem nicht magnetisierbaren Deckmaterial, wie einer Deckschicht, vorzugsweise Teflonschicht, ausgebildet ist oder dass die Prallplatte (25) durch einen nichtmetallischen Werkstoff, wie Kunststoff, realisiert ist, welcher zur Aufnahme von Anziehungskräften mit metallischen Partikeln versehen ist, und dass ein Radialabstand (r) zwischen einem kreisringförmigen Außenrand der Prallplatte (25) des Prallventilglieds (23) und der gegenüberliegenden zylindrischen Innenwandseite des Gehäuses (3) der Luftkammer (17) kleiner als 2 mm ist.

3. Elektropneumatisches Magnetventil (1) nach Anspruch 1 oder 2, bei dem das Verschlusselement (31) als ein beidseitig von der Prallplatte (25) vorragender Vorsprung gebildet ist, der zumindest abschnittsweise im Wesentlichen konvex sphärisch geformt ist und/oder der in einem Zentrum einer insbesondere kreisförmigen Prallplatte (25) ausgebildet ist, wobei das Verschlusselement (31) als separate, in der Prallplatte eingesetzte Kugel ausgebildet ist und/oder aus einem nicht magnetischen Material, wie Keramik, besteht.

4. Elektropneumatisches Magnetventil (1) nach Anspruch 1, 2 oder 3, bei dem die Prallplatte (25) zwei sich gegenüberliegende plane Plattenflächen aufweist und/oder wenigstens zwei ringförmig umlaufende Plattenabschnitte aufweist, von denen wenigstens zwei in axialer Stellrichtung (S) versetzt zueinander angeordnet sind, wobei die Prallplatte (25) im Querschnitt zumindest einmal gestuft ist.

5. Elektropneumatisches Magnetventil (1) nach einem der vorstehenden Ansprüche, bei dem die Prallplatte (25) einen radial innen liegenden Innenanschlagsbereich, der einem Spulenkern (33) der elektromagnetischen Stelleinrichtung (21) diametral axial gegenüberliegt, und einen den Innenanschlagsbereich radial außen umgebenden Außenanschlagsbereich aufweist, der einem eine Spule (37) der elektromagnetischen Stelleinrichtung (21) radial außen umgebenden Spulenmantel (43) der elektromagnetischen Stelleinrichtung (21) oder einem Gehäuseabschnitt (3) des Magnetventils (1) diametral axial gegenüberliegt, wobei in dem Spulenkern (33) einer der Luftkanäle, wie der Entlüftungskanal (15), ausgebildet ist.

6. Elektropneumatisches Magnetventil (1) nach Anspruch 5, bei dem die Prallplatte (25) und die zugeordneten Anschlagsbereiche derart ausgelegt sind, dass bei Belegung des Luftkanals in dem Spulenkern durch das verschlossene Verschlusselement (31) der radial äußere Axialabstand (a) der Prallplatte (25) zum Außenanschlagsbereich kleiner als der radial innere Axialabstand (b) der Prallplatte (25) zum Innenanschlagsbereich ist, wobei der radial innere Axialabstand (b) bei Belegung eines Luftkanals (15) in dem Spulenkern (33) durch das Verschlusselement (31) kleiner als 1,0 mm, 0,5 mm, 0,3 mm oder 0,1 mm ist und/oder der radial äußere Axialabstand (a) um wenigstens ein Drittel, vorzugsweise etwa um die Hälfte, kleiner als der radial innere axial Abstand (b) dimensioniert ist.

7. Elektropneumatisches Magnetventil (1) nach Anspruch 5 oder 6, bei dem koaxial zu dem Luftkanal in dem Spulenkern (33) ein weiterer Luftkanal, wie der Luftzuführkanal (13) oder der Luftabführkanal (11), in dem Gehäuse (3) des Magnetventils (1) derart eingebracht ist, dass eine Rückseite des Verschlusselements (31), dessen Vorderseite den Entlüftungskanal (15) in dem Spulenkern (33) verschließt, bei entsprechender axialer Verlagerung der Prallplatte (25) unter dem Einfluss des Zwangsmittels den Luftzuführkanal (13) in dem dem Spulenkern (33) axial gegenüberliegenden Magnetventilgehäuse (3) verschließt, wobei radial versetzt zu dem Luftzuführkanal (13) in dem Magnetventilgehäuse (3) ein weiterer Luftkanal (11), wie der Luftabführkanal (11), ausgebildet ist, der von dem Verschlusselement (31) an keiner axialen Stellposition verschließbar ist.

8. Elektropneumatisches Magnetventil (1) nach einem der vorstehenden Ansprüche **dadurch gekennzeichnet, dass** die Prallplatte (25) und wenigstens zwei mit der Prallplatte (25) zusammen wirkende sich gegenüber liegende Sitzbohrungen und ein Maximalhub (H) der Prallplatte (25) so ausgelegt sind, dass das Verschlusselement (31) im Bereich einer Sitzbohrung gehalten wird und sich beim Schließen mittig der Sitzbohrungen zentriert.

9. Elektropneumatisches Magnetventil (1) nach einem der vorstehenden Ansprüche, wobei der Luftzuführkanal (13) an einer Luftdruckquelle angeschlossen ist oder wobei an dem Luftzuführkanal (13) ein geregeltes Luftsignal von einem elektropneumatischen Stellungsregler angeschlossen ist und/oder wobei der Luftabführkanal (11) an einen einfach- oder doppeltwirkenden pneumatischen Stellantrieb angeschlossen ist.

## Claims

1. An electropneumatic solenoid valve (1) for a pneumatically actuated field device of a processing plant, such as a chemical plant, a petrochemical plant, a foodstuff processing plant, such as a brewery, a nuclear power plant or the like, comprising:
- an air supply channel (13), an air dispensing channel (11) and an air exhaust channel (15), wherein the air channels (11, 13, 15) mound into an air chamber (17);
- a flapper valve member (23), comprising a magnetizeable flapper plate (25) having at least one closure side arranged facing at least one air channel (13, 15) to be closed or to be released; and
- an electromagnetic control device (21) which deplaces the flapper valve member (23) in an axial control direction (S) for ventilating or exhausting the air dispensing channel (11), wherein the flapper plate (25) being engageable with an axial contact wall of the air chamber (17) to be magnetized by an electromagnetic control device (31) of the solenoid valve (1);
- a biasing means, such as a spring, forcing the flapper valve member (23) into a closed position for closing one of the air channels (13, 15), such as the air supply channel (13), wherein the flapper valve member comprises a closure element (31) being engageable with a delimitation interior wall mouth of a delimitation inner wall of this air channel (13, 15) such that the flapper valve member (23) is arranged with a circumferential axial distance to the delimitation interior wall, wherein the flapper valve member (23) is float-mounted unguided except for the biasing means within the air chamber (17), **characterized in that** the at least one closure side is at least surface-sectionally formed with a non-magnetizeable cover material, such as a cover layer, preferably a Teflon layer, or **in that** the flapper plate 25 is realized by a non-metallic material, such as a polymer material or plastic material, which is provided with metallic particles for receiving attraction forces, and **in that** the air chamber (17) is radially delimited by a chamber interior wall, wherein a circular flapper plate (25) is float-mounted axially moveable within the air chamber (17), wherein a maximal axial amplitude (H) of movement of the flapper valve member (23) in the axial control direction (S) is at most one quarter in particular to one tenth of the axial thickness of the flapper plate (25), wherein the thickness of the flapper plate (25) lies between 0.6 mm and 1 mm and/or wherein a maximal stroke is 0.1 mm to 0.3 mm.

2. An electropneumatic solenoid valve (1) for a pneumatically actuated field device of a processing plant, such as a chemical plant, a petrochemical plant, a foodstuff processing plant, such as a brewery, a nuclear power plant or the like, comprising:
- an air supply channel (13), an air dispensing channel (11) and an air exhaust channel (15), wherein the air channels (11, 13, 15) mound into an air chamber (17);
- a flapper valve member (23), comprising a magnetizeable flapper plate (25) having at least one closure side arranged facing at least one air channel (13, 15) to be closed or to be released; and
- an electromagnetic control device (21) which deplaces the flapper valve member (23) in an axial control direction (S) for ventilating or exhausting the air dispensing channel (11), wherein the flapper plate (25) being engageable with an axial contact wall of the air chamber (17) to be magnetized by an electromagnetic control device (31) of the solenoid valve (1);
- a biasing means, such as a spring, forcing the flapper valve member (23) into a closed position for closing one of the air channels (13, 15), such as the air supply channel (13), wherein the flapper valve member comprises a closure element (31) being engageable with a delimitation interior wall mouth of a delimitation inner wall of this air channel (13, 15) such that the flapper valve member (23) is arranged with a circumferential axial distance to the delimitation interior wall, wherein the flapper valve member (23) is float-mounted unguided except for the biasing means within the air chamber (17), **characterized in that** the at least one closure side is at least surface-sectionally formed with a non-magnetizeable cover material, such as a cover layer, preferably a Teflon layer, or **in that** the flapper plate 25 is realized by a non-metallic material, such as a polymer material or plastic material, which is provided with metallic particles for receiving attraction forces, and **in that** a radial distance (r) between a circular outer end of the flapper plate (25) of the flapper plate member (23) and the opposing cylindrical inner wall side of the housing (3) of the air chamber (17) is smaller than 2 mm.

3. The electropneumatic solenoid valve (1) according to claim 1 or 2, wherein the closure element (31) is formed as a projection projecting on both sides from the flapper plate (25) of the flapper valve member (23), which in particular at least sectionally is shaped essentially convex spherically and/or which is formed in a center of an in particular circular flapper plate (25), wherein in particular the closure element (31) is formed as a separate sphere inserted into the flapper plate and/or consists of a non-magnetic material, such as ceramics.

4. The electromagnetic solenoid valve (1) according to claim 1, 2 or 3, wherein the flapper valve member (23) comprises two plane plate surfaces opposite from one another and/or at least two annularly surrounding plate sections, at least two of which are arranged offset from one another in the axial control direction (S), wherein in particular the flapper plate (25) is stepped at least once in its cross section.

5. The electromagnetic solenoid valve (1) according to one of the preceding claims, wherein the flapper valve member comprises a radially inwardly arranged interior end stop section axially diametrically opposite from a coil core (33) of the electromagnetic control device (21) and an exterior end stop section radially outwardly surrounding the interior end stop section, the exterior end stop section being arranged diametrically axially opposite to a coil coat (43) of the electromagnetic control device (21) radially outwardly surrounding a coil (37) or being arranged diametrically axially opposite to a housing section (3) of the solenoid valve (1), wherein one of the air channels, such as the exhaust channel (15), is formed within the coil core (33).

6. The electropneumatic solenoid valve (1) according to claim 5, wherein the flapper valve member (23) and the corresponding end stop sections are configured such that, when the air channel inside the coil core is occupied by the closed closure member (31), the radially outer axial distance (a) from the flapper valve member (23) to the exterior end stop section is smaller than the radially inner axial distance (b) from the flapper valve member (23) to the interior end stop section, wherein the radially inner axial distance (b), during occupation of an air channel (15) within the coil core (33) by the closure element (31), is smaller than 1.0 mm, 0.5 mm, 0.3 mm or 0.1 mm and/or the radially outer axial distance (a) being dimensioned smaller than the radially inner axial distance (b) by at least one third, preferably one half.

7. The electropneumatic solenoid valve (1) according to claim 5 or 6, wherein a further air channel, such as the air supply channel (13) or the air dispensing channel (11), is inserted into the housing (3) of the solenoid valve (1) such that a rear side of the closure member (31), the front side of which closes the air exhaust channel (15) in the coil core (33), closes the air supply channel (13) in solenoid valve housing (3) axially opposite from the coil core (33) under the influence of the biasing means after a corresponding axial displacement of the flapper valve member (23), wherein a further air channel (11), such as the air dispensing channel (11), is formed radially offset to the air supply channel (13) in the solenoid valve housing (3), this further air channel not being closable by the closure member (31) in any axial control position thereof.

8. The electropneumatic solenoid valve (1) according to one of the preceding claims, wherein the flapper valve member (23) and at least one seat-bore cooperating with the flapper valve member (23) being arranged opposite one another, and a maximal stroke (H) of the flapper valve member (23) are configured such that the closure element (31) is held in the area of one of the seat bores and centers itself in the middle of the seat bore upon closing.

9. The electropneumatic solenoid valve (1) according to one of the preceding claims, wherein the air supply channel (13) is attached to a source of pressurized air, or wherein a controlled air signal from an electropneumatic position controller is attached to the air supply channel (13) and/or wherein the air dispensing channel (11) is connected to a pneumatic positioning drive, which is of a single-action or a double-action type.

## Revendications

1. Soupape magnétique électropneumatique (1) pour un appareil de terrain commandé pneumatiquement d'une installation industrielle, telle qu'une installation chimique, une installation pétrochimique, une installation de traitement de produits alimentaires, telle qu'une brasserie, une centrale nucléaire ou autre, comprenant :
- un canal d'alimentation en air (13), un canal d'évacuation d'air (11) et un canal d'aération (15), les canaux d'air (11, 13, 15) débouchant sur une chambre d'air (17) ;
- un organe de soupape d'impact (23) conçu comme une plaque d'impact magnétisable (25) avec au moins un côté de fermeture destiné à être tourné vers un canal d'air (13, 15) à fermer ou à dégager ; et
- un système de réglage électromagnétique (21) déplaçant la plaque d'impact (25) pour l'aération et/ou la désaération du canal d'évacuation d'air (11) dans une direction de réglage axiale (S), la plaque d'impact (25) pouvant entrer en contact avec une paroi d'installation axiale de la chambre d'air (17) destinée à être magnétisée par un système de réglage électromagnétique (21) de la soupape magnétique (1) ;
- un moyen de contrainte, tel qu'un ressort, contraignant la plaque d'impact (25) dans la direction de réglage axiale (S) dans une position de fermeture destinée à fermer l'un des canaux d'air (13, 15), par exemple le canal d'alimentation (13), la plaque d'impact (25) comportant un élément de fermeture (31) venant en prise de telle façon avec une ouverture de paroi intérieure de délimitation d'une paroi intérieure de délimitation du canal d'air pour fermer le canal d'air (13, 15), que la plaque d'impact (25) est disposée à une distance axiale périphérique de la paroi intérieure de délimitation, la plaque d'impact (25) étant montée de façon flottante sans guidage à l'exception du moyen de contrainte dans la chambre d'air, **caractérisée en ce que** l'au moins un côté de fermeture est formé au moins par sections de surface avec un matériau de revêtement non magnétisable, tel qu'une couche de revêtement, de préférence une couche de téflon, ou **en ce que** la plaque d'impact (25) est réalisée en un matériau non métallique, tel que du plastique, lequel est doté de particules métalliques pour la réception de forces d'attraction, et en ce la chambre d'air (17) est délimitée radialement par une paroi intérieure de chambre, dans laquelle la plaque d'impact (25) circulaire est montée de façon flottante et déplaçable axialement dans la chambre d'air (17), dans laquelle une amplitude de déplacement maximale axiale (H) de la plaque d'impact (25) dans la direction de réglage axiale (S) s'élève tout au plus à un dixième de l'épaisseur axiale de la plaque d'impact (25), l'épaisseur de la plaque d'impact (25) étant comprise entre 0,6 mm et 1 mm et/ou une course maximale étant comprise entre 0,1 mm et 0,3 mm.

2. Soupape magnétique électropneumatique (1) pour un appareil de terrain commandé pneumatiquement d'une installation industrielle, telle qu'une installation chimique, une installation pétrochimique, une installation de traitement de produits alimentaires, telle qu'une brasserie, une centrale nucléaire ou autre, comprenant :
- un canal d'alimentation en air (13), un canal d'évacuation d'air (11) et un canal d'aération (15), les canaux d'air (11, 13, 15) débouchant sur une chambre d'air (17) ;
- un organe de soupape d'impact (23) conçu comme une plaque d'impact magnétisable (25) avec au moins un côté de fermeture destiné à être tourné vers un canal d'air (13, 15) à fermer ou à dégager ; et
- un système de réglage électromagnétique (21) déplaçant la plaque d'impact (25) pour l'aération et/ou la désaération du canal d'évacuation d'air (11) dans une direction de réglage axiale (S), la plaque d'impact (25) pouvant entrer en contact avec une paroi d'installation axiale de la chambre d'air (17) destinée à être magnétisée par un système de réglage électromagnétique (21) de la soupape magnétique (1) ;
- un moyen de contrainte, tel qu'un ressort, contraignant la plaque d'impact (25) dans la direction de réglage axiale (S) dans une position de fermeture destinée à fermer l'un des canaux d'air (13, 15), par exemple le canal d'alimentation (13), la plaque d'impact (25) comportant un élément de fermeture (31) venant en prise de telle façon avec une ouverture de paroi intérieure de délimitation d'une paroi intérieure de délimitation du canal d'air pour fermer le canal d'air (13, 15), que la plaque d'impact (25) est disposée à une distance axiale périphérique de la paroi intérieure de délimitation, la plaque d'impact (25) étant montée de façon flottante sans guidage à l'exception du moyen de contrainte dans la chambre d'air, **caractérisée en ce que** l'au moins un côté de fermeture est formé au moins par sections de surface avec un matériau de revêtement non magnétisable, tel qu'une couche de revêtement, de préférence une couche de téflon, ou **en ce que** la plaque d'impact (25) est réalisée en un matériau non métallique, tel que du plastique, lequel est doté de particules métalliques pour la réception de forces d'attraction, et **en ce qu'**une distance radiale (r) entre un bord extérieur circulaire de la plaque d'impact (25) de l'organe de soupape d'impact (23) et le côté de paroi intérieure cylindrique opposé du boîtier (3) de la chambre d'air (17) est inférieure à 2 mm.

3. Soupape magnétique électropneumatique (1) selon la revendication 1 ou 2, dans laquelle l'élément de fermeture (31) est réalisé comme une protubérance faisant saillie de part et d'autre de la plaque d'impact (25), laquelle est formée au moins par sections de façon essentiellement convexe en sphère et/ou laquelle est réalisée en un centre d'une plaque d'impact (25) en particulier circulaire, l'élément de fermeture (31) étant réalisé comme une boule séparée insérée dans la plaque d'impact et/ou constitué d'un matériau non magnétique, tel que la céramique.

4. Soupape magnétique électropneumatique (1) selon la revendication 1, 2 ou 3, dans laquelle la plaque d'impact (25) présente des surfaces de plaque planes opposées et/ou présente au moins deux sections de plaque périphériques circulaires, dont au moins deux sont disposées de façon décalée les unes par rapport aux autres dans la direction de réglage axiale (S), la plaque d'impact (25) présentant au moins un gradin dans sa section transversale.

5. Soupape magnétique électropneumatique (1) selon l'une des revendications précédentes, dans laquelle la plaque d'impact (25) présente une région de butée intérieure située radialement à l'intérieur, laquelle est diamétralement axialement opposée à un noyau de bobine (33) du système de réglage électromagnétique (21), ainsi qu'une région de butée extérieure entourant radialement extérieurement la région de butée intérieure, laquelle est diamétralement axialement opposée à une enveloppe de bobine (43) du système de réglage électromagnétique (21) entourant radialement extérieurement une bobine (37) du système de réglage électromagnétique (21) ou à une section de boîtier (3) de la soupape magnétique (1), dans laquelle l'un des canaux d'air, par exemple le canal d'aération (15), est formé dans le noyau de bobine (33).

6. Soupape magnétique électropneumatique (1) selon la revendication 5, dans laquelle la plaque d'impact (25) et les régions de butée correspondantes sont conçues de telle façon que lorsque le canal d'air dans le noyau de bobine est occupé par l'élément de fermeture (31) fermé, la distance axiale radialement extérieure (a) entre la plaque d'impact (25) et la région de butée extérieure est inférieure à la distance axiale radialement intérieure (b) entre la plaque d'impact (25) et la région de butée intérieure, dans laquelle la distance axiale radialement intérieure (b) est inférieure à 1,0 mm, à 0,5 mm, à 0,3 mm ou à 0,1 mm lorsqu'un canal d'air (15) dans le noyau de bobine (33) est occupé par l'élément de fermeture (31) et/ou la distance axiale radialement extérieure (a) est inférieure d'au moins un tiers, de préférence d'environ la moitié, à la distance axiale radialement intérieure (b).

7. Soupape magnétique électropneumatique (1) selon la revendication 5 ou 6, dans laquelle un autre canal d'air, par exemple le canal d'alimentation en air (13) ou le canal d'évacuation d'air (11), est intégré de telle façon dans le boîtier (3) de la soupape magnétique (1), coaxialement au canal d'air dans le noyau de bobine (33), qu'une face arrière de l'élément de fermeture (31), dont la face avant ferme le canal d'aération (15) dans le noyau de bobine (33), ferme le canal d'alimentation en air (13) dans le boîtier de soupape magnétique (3) axialement opposé au noyau de bobine (33), lors d'un déplacement axial correspondant de la plaque d'impact (25) sous l'influence du moyen de contrainte, dans laquelle un autre canal d'air (11), par exemple le canal d'évacuation d'air (11), lequel ne peut être fermé par l'élément de fermeture (31) en aucune position de réglage axiale, est réalisé de façon radialement décalée par rapport au canal d'alimentation en air (13) dans le boîtier de soupape magnétique (3).

8. Soupape magnétique électropneumatique (1) selon l'une des revendications précédentes, **caractérisée en ce que** la plaque d'impact (25) et au moins deux perçages de siège opposés l'un à l'autre et coopérant avec la plaque d'impact (25) ainsi qu'une course maximale (H) de la plaque d'impact (25) sont conçus de telle façon que l'élément de fermeture (31) est maintenu dans la région d'un perçage de siège et se place de façon centrée au milieu du perçage de siège lors de la fermeture.

9. Soupape magnétique électropneumatique (1) selon l'une des revendications précédentes, dans laquelle le canal d'alimentation en air (13) est raccordé à une source d'air comprimé ou dans laquelle un signal d'air réglé d'un dispositif de réglage de position électropneumatique est raccordé au niveau du canal d'alimentation en air (13) et/ou dans laquelle le canal d'évacuation d'air (11) est raccordé à un entraînement de réglage pneumatique à action double ou simple.
